# EUROPEAN PATENT APPLICATION

(11) **EP 2 892 014 A1**
(43) Date of publication of application: **08.07.2015**
(21) Application number: 14199264.4
(22) Date of filing: 19.12.2014
(51) Int. Cl.: G06Q 10/06, G06Q 50/02, G06Q 50/08

(54) **Machine Group Selection for Machine Data Management**

(30) Priority: 03.01.2014 US 201461923316 P; 25.11.2014 US 201462084385 P
(71) Applicant: Agco Corporation, Duluth, Georgia 30096 (US)
(72) Inventor: Jelle, Ryan Ardin, Hesston, KS Kansas 67062-0969 (US)
(74) Representative: AGCO Intellectual Property Department

(57) **Abstract**

A system for managing machine data includes one or more computing devices configured to select a plurality of mobile machines to form a machine group, receive machine operating data from each of the mobile machines in the machine group, and use the collective machine operating data to define data management parameters associated with at least one of the mobile machines. The one or more computing devices may be configured to select the plurality of mobile machines based on such factors as geographic location of the machines, machine type or model, work being performed by the machine and/or environmental conditions of the machines. The one or more computing devices may further be configured to automatically add machines to the machine group and remove machines from the machine group.

## Description

### FIELD

Embodiments of the present invention relate to systems and methods for managing machine data. More particularly, embodiments of the invention relate to systems and methods for optimizing machine data management using collective machine data.

### BACKGROUND

Machines used in the agricultural, construction and forestry industries often include on-board systems for collecting data relating to machine operations. Such data may relate to the status of the machine, to work being performed by the machine, or both. Machine data may be used for real-time analysis and monitoring, may be stored for later analysis, or both.

The above section provides background information related to the present disclosure which is not necessarily prior art.

### SUMMARY

A system for managing machine data according to a first embodiment of the invention comprises one or more computing devices operable to select a plurality of mobile machines to form a machine group, receive machine operating data from each of the mobile machines in the machine group, and use the collective machine operating data to define data management parameters associated with at least one of the mobile machines.

A method of managing machine data according to another embodiment of the invention comprises automatically selecting a plurality of mobile machines to form a machine group, collecting machine operating data from each of the mobile machines in the machine group, and using the collective machine operating data to define data management parameters associated with at least one of the mobile machines.

These and other important aspects of the present invention are described more fully in the detailed description below. The invention is not limited to the particular methods and systems described herein. Other embodiments may be used and/or changes to the described embodiments may be made without departing from the scope of the claims that follow the detailed description.

### DRAWINGS

Embodiments of the present invention are described in detail below with reference to the attached drawing figures, wherein:
Fig. 1 is a schematic diagram of exemplary computer and communications equipment that may be used to implement certain aspects of the present invention.
Fig. 2 is a schematic diagram of an exemplary machine communications and control system, various components of which may be used to implement certain aspects of the present invention.
Fig. 3A is a schematic diagram illustrating a plurality of construction machines in communication with computing devices of Fig. 1.
Fig. 3B is a schematic diagram illustrating a plurality of construction machines in communication with computing devices of Fig. 1.
Fig. 4 is a flow diagram illustrating an exemplary method of managing machine data according to embodiments of the invention.
Fig. 5 is an exemplary map illustrating a geographic region and various governmental or legal boundaries associated with the region.
Fig. 6 depicts the map of Fig. 5 including various areas of the map selected to define a machine group.
Fig. 7 depicts the map of Fig. 5 including a geographic region defining a machine group, the geographic region defined by a boundary that does not correspond to the governmental or legal boundaries.
Fig. 8 depicts the map of Fig. 5 including multiple geographic regions defining a machine group, the geographic regions defined by boundaries that do not correspond to the governmental or legal boundaries.
Fig. 9 depicts a graph illustrating instances of machine operation exceptions relative to a normal range of a machine operating variable.
Fig. 10 depicts the graph of Fig. 9, wherein the normal range is adjusted to exclude a cluster of machine operation exceptions.
Figs. 11-12 depict a graph illustrating instances of machine operation exceptions relative to the normal ranges of two machine operating variables.
Fig. 13 depicts the graph of Figs. 11 and 12 wherein one of the normal machine variable operating ranges is adjusted to exclude a cluster of machine operation exceptions.

The drawing figures do not limit the present invention to the specific embodiments disclosed and described herein. The drawings are not necessarily to scale, emphasis instead being placed upon clearly illustrating the principles of the invention.

### DESCRIPTION

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the scope of the claims. The following description is, therefore, not to be taken in a limiting sense.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

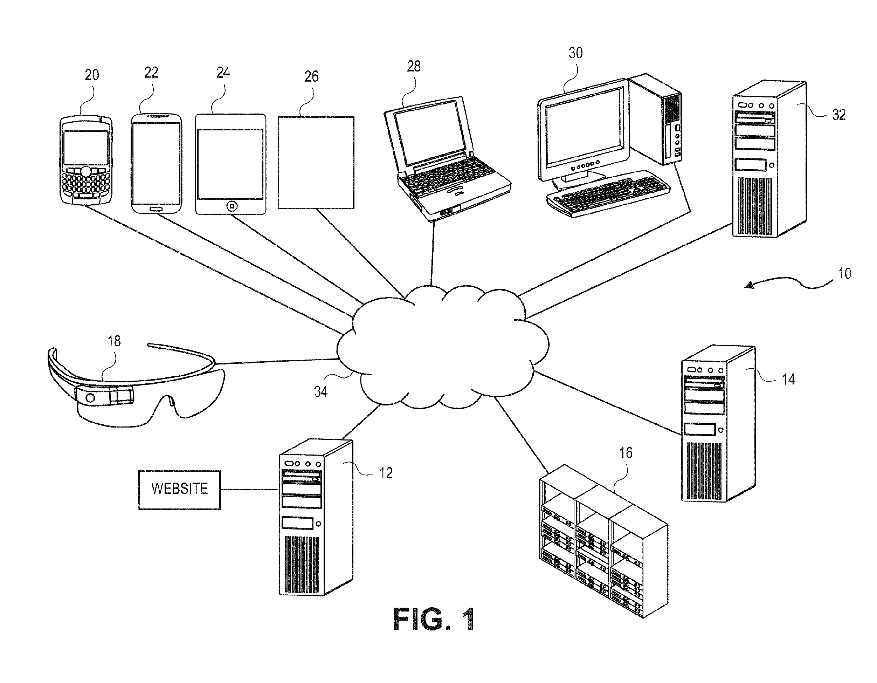

Certain aspects of the present invention can be implemented by, or with the assistance of, computing equipment such as computers and associated devices including data storage devices. Such aspects of the invention may be implemented in hardware, software, firmware, or a combination thereof. In one exemplary embodiment, aspects of the invention are implemented with a computer program or programs that operate computer and communications equipment broadly referred to by the reference numeral 10 in Fig. 1. The exemplary computer and communications equipment 10 may include one or more host computers or systems 12, 14, 16 (hereinafter referred to simply as "host computers") and a plurality of electronic or computing devices 18, 20, 22, 24, 26, 28, 30, 32 that may access the host computers via a communications network 34. The computer programs and equipment illustrated and described herein are merely examples of programs and equipment that may be used to implement aspects of the invention and may be replaced with other programs and computer equipment without departing from the scope of the invention.

The host computers 12, 14, 16 may serve as repositories for data and programs used to implement certain aspects of the present invention as described in more detail below. The host computers 12, 14, 16 may be any computing and/or data storage devices such as network or server computers and may be connected to a firewall to prevent tampering with information stored on or accessible by the computers. Although three host computers 12, 14, 16 are described and illustrated herein, embodiments of the invention may use any combination of host computers and/or other computers or equipment. For example, the computer-implemented features and services described herein may be divided between the host computers 12, 14, 16 or may all be implemented with only one of the host computers. Furthermore, the functionality of the host computers 12, 14, 16 may be distributed amongst many different computers in a cloud computing environment.

The electronic devices 18-32 may include various types of devices that can communicate with the host computers 12, 14, 16 via the communications network 34. By way of example, the electronic devices 18-32 may include one or more laptop, personal or network computers 28-32 as well as one or more smart phones, tablet computing devices or other handheld, wearable and/or personal computing devices 18-24. The devices 18-32 may include one or more devices or systems 26 embedded in or otherwise associated with a mobile machine wherein the device or system 26 enables the mobile machine, an operator of the machine, or both to communicate with and/or access one or more of the host computers 12, 14, 16 or other computing device. Each of the electronic devices 18-32 may include or be able to access a web browser and a conventional Internet connection such as a wired or wireless data connection. As explained below, the device 26 may be a gateway on a mobile machine that enables a control and communications system of the machine to communicate machine data to the one or more host computers 12, 14, 16 and to receive machine data management parameters from the one or more host computers 12, 14, 16. Furthermore, while a single device or system 26 is illustrated in Fig. 1, some embodiments of the invention may include a large number of the devices or systems 26 communicatively coupled with the communications network 34. By way of example, a large number of machines located across a large geographic area may include communications gateways communicatively coupled with the communications network 34.

The communications network 34 preferably is or includes the Internet but may also include other communications networks such as a local area network, a wide area network, a wireless network, or an intranet. The communications network 34 may also be a combination of several networks. For example, the electronic devices 18-32 may wirelessly communicate with a computer or hub in a store via a local area network (e.g., a Wi-Fi network), which in turn communicates with one or more of the host computers 12, 14, 16 via the Internet or other communication network.

One or more computer programs implementing certain aspects of the present invention may be stored in or on computer-readable media residing on or accessible by the computing and communications equipment 10. The one or more computer programs preferably comprise ordered listings of executable instructions for implementing logical functions in the host computers 12, 14, 16 and/or the devices 18-32. The one or more computer programs can be embodied in any computer-readable medium for use by or in connection with an instruction execution system, apparatus, or device, such as a computer-based system, processor-containing system, or other system that can fetch the instructions from the instruction execution system, apparatus, or device, and execute the instructions. In the context of this application, a "computer-readable medium" can be any means that can contain, store, communicate, propagate or transport the program for use by or in connection with the instruction execution system, apparatus, or device. The computer-readable medium can be, for example, but not limited to, an electronic, magnetic, optical, electromagnetic, infrared, or semi-conductor system, apparatus, device, or propagation medium. More specific, although not inclusive, examples of the computer-readable medium would include the following: an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM).

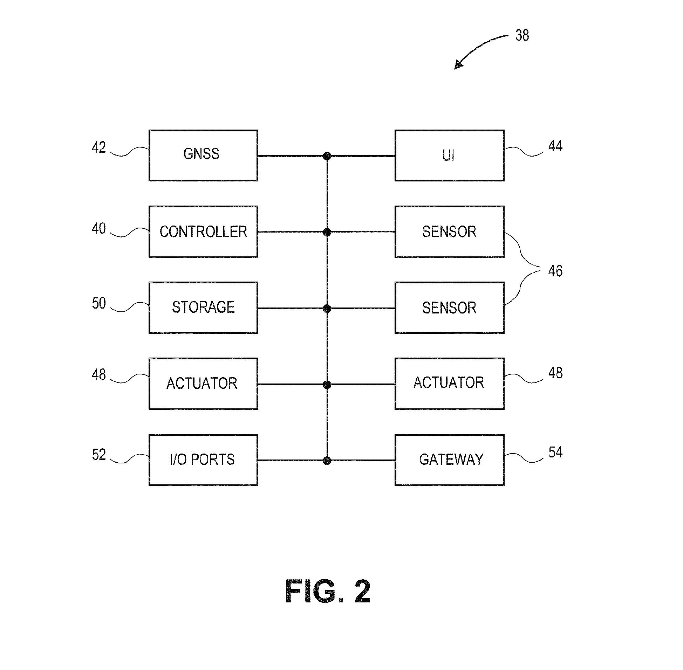

Certain aspects of the present invention can be implemented by or with the assistance of an electronic system associated with a machine, such as a control and communications system associated with a mobile machine. More specifically, aspects of the present invention may be implemented by or with the assistance of an electronic system of a mobile machine used in the agriculture and/or construction industries. Such machines may include tractors, harvesters, loaders, excavators, graders or scrapers. Various components of an exemplary electronic system 38 are illustrated in Fig. 2. The system 38 broadly includes a controller 40, a position determining device 42, a user interface 44, one or more sensors 46, one or more actuators 48, one or more storage components 50, one or more input/out ports 52 and a gateway 54.

The position determining device 42 may include a global navigation satellite system (GNSS) receiver, such as a device configured to receive signals from one or more positioning systems such as the United States' global positioning system (GPS), the European GALILEO system and/or the Russian GLONASS system, and to determine a location of the machine using the received signals. The user interface 44 includes components for receiving instructions or other input from a user and may include buttons, switches, dials, and microphones, as well as components for presenting information or data to users, such as displays, light-emitting diodes, audio speakers and so forth. The user interface 44 may include a touchscreen display capable of presenting visual representations of information or data and receiving instructions or input from the user via a single display surface.

The sensors 46 may be associated with any of various components or functions of an associated machine including, for example, various elements of the engine, transmission(s), wheels, hydraulic and electrical systems, and crop/material processing devices or systems. One or more of the sensors 46 may be configured and placed to detect environmental or ambient conditions in, around or near a machine with which the system 38 is associated. Such environmental or ambient conditions may include temperature, humidity, wind speed and wind direction. The actuators 48 are configured and placed to drive certain functions of the machine including, for example, steering when an automated guidance function is engaged. The actuators 48 may take virtually any form but are generally configured to receive control signals or instructions from the controller 40 (or other component of the system 38) and to generate a mechanical movement or action in response to the control signals or instructions. By way of example, the sensors 46 and actuators 48 may be used in automated steering of a machine wherein the sensors 46 detect a current position or state of steered wheels or tracks and the actuators 48 drive steering action or operation of the wheels or tracks. In another example, the sensors 40 collect data relating to the operation of the machine and store the data in the storage component 50, communicate the data to a remote computing device via the gateway 54, or both.

The controller 40 includes one or more integrated circuits programmed or configured to implement the functions described herein. By way of example the controller 40 may be a digital controller and may include one or more general purpose microprocessors or microcontrollers, programmable logic devices, and/or application specific integrated circuits. The controller 40 may include multiple computing components placed in various different locations on the machine. The controller 40 may also include one or more discrete and/or analog circuit components operating in conjunction with the one or more integrated circuits or computing components. Furthermore, the controller 40 may include or have access to one or more memory elements operable to store executable instructions, data, or both. The storage device 50 stores data and preferably includes a non-volatile storage medium such as optic, magnetic or solid state technology. As explained below, the controller 40 may be configured to implement machine data management parameters, including parameters relating to the collection, storage and communication of machine data collected by the sensors 46.

It will be appreciated that, for simplicity, certain elements and components of the system 38 have been omitted from the present discussion and from the drawing of Fig. 2. A power source or power connector is also associated with the system 38, for example, but is conventional in nature and, therefore, is not discussed herein.

In some embodiments, all of the components of the system 38 are contained on or in a host machine. The present invention is not so limited, however, and in other embodiments one or more of the components of the system 38 may be external to the machine. In another embodiment, for example, some of the components of the system 38 are contained on or in the machine while other components of the system are contained on or in an implement associated with the machine. In that embodiment, the components associated with the machine and the components associated with the implement may communicate via wired or wireless communications according to a local area network such as, for example, a controller area network. The system 38 may be part of a communications and control system conforming to the ISO 11783 (also referred to as "ISOBUS") standard. In yet another exemplary embodiment, one or more components of the system 38 may be located remotely from the machine and any implements associated with the machine. In that embodiment, the system 38 may include wireless communications components (e.g., the gateway 54) for enabling the machine to communicate with a remote computer, computer network or system.

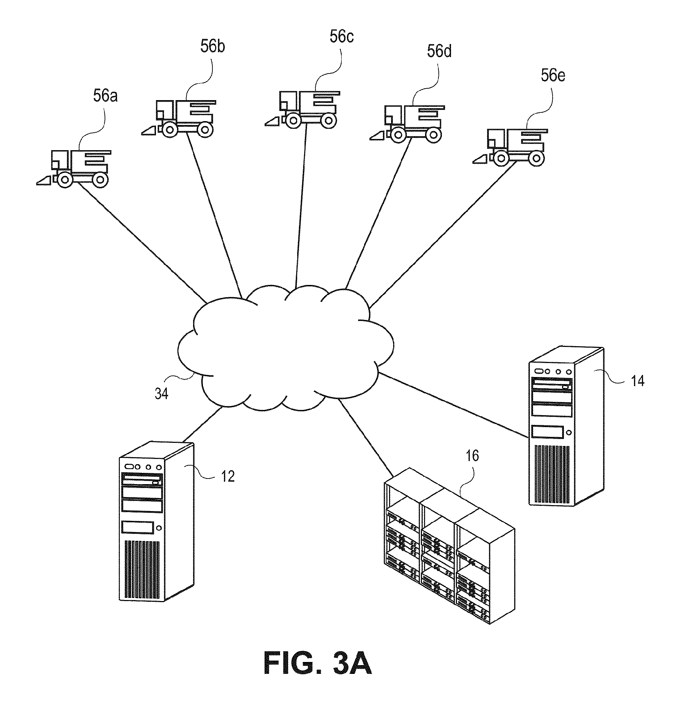

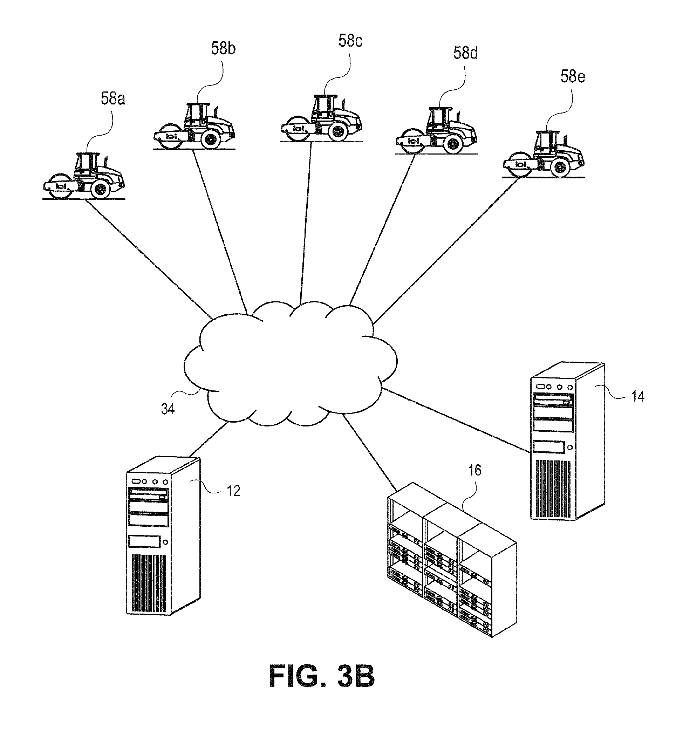

Embodiments of the present invention relate to systems and methods for optimizing machine data management using collective machine data. A first exemplary implementation is illustrated in Fig. 3A including a plurality of machines 56a-e, in this case combine harvesters, in communication with one or more of the computing devices 12, 14, 16 via the communications network 34. Each of the machines 58 may have a communications and control system similar or identical to the system 38 described above, and may communicate with the network 34 by way of a gateway similar to the gateway 54 and corresponding to the device 26 of Fig. 1. A second exemplary implementation is illustrated in Fig. 3B including a plurality of construction machines 58a-e in communication with one or more of the computing devices 12, 14, 16 via the communications network 34.

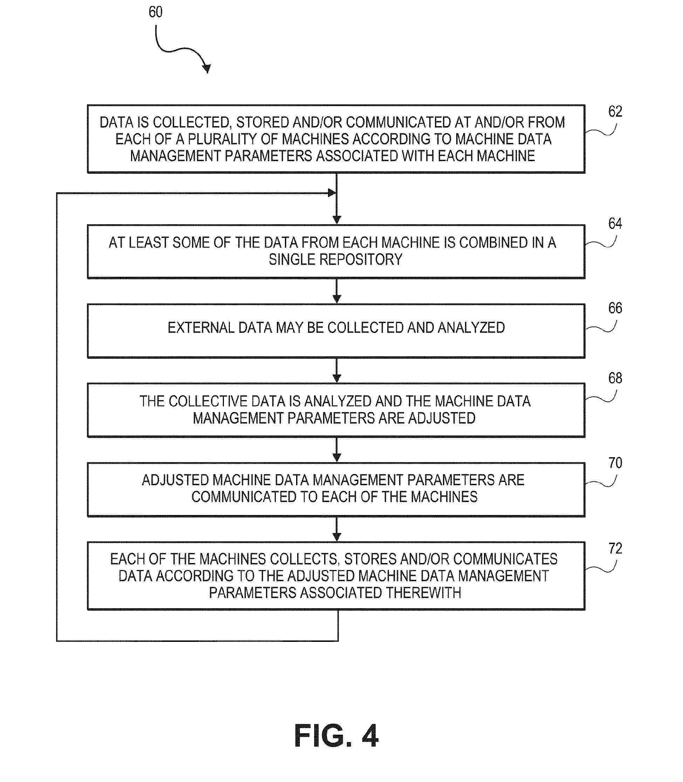

An exemplary method 60 embodying principles of the invention is illustrated in Fig. 4. First, machine data is collected, stored and/or communicated at and/or from each of a plurality of machines according to machine data management parameters associated with each machine, as depicted in block 62. In the scenario illustrated in Fig. 3, the plurality of machines may include all of the combine harvesters 56a-e or all of the machines 58a-e, and step 62 of the method 60 may be performed by machine communication and control systems (e.g., systems similar to the system 38) associated with the machines 56 or 58. At least some of the machine data from each of the machines is combined (physically or logically) into a single repository, as depicted in block 64. This step may involve transferring data from the machines to a remote computing device (e.g., one or more of the computing devices 12-16, 20-24, or 28-32) via a wireless network or manually using portable physical storage devices. The data repository may include physical storage components associated with one or more of the host computers 12, 14 and 16.

External machine data may also be collected and analyzed with the machine data collected from the machines, as depicted in block 66. The external machine data may include machine component failure or degradation data collected automatically by electronic diagnostic tools or manually by technicians at service centers or by machine owners. By way of example, the external machine data may be communicated to a centralized or remote computing device automatically via an electronic diagnostics tool or manually by a user via one of the computing devices 18-24, 28-32. The combined data is analyzed and the data management parameters are revised, as depicted in block 68. The revised parameters are communicated to each of the plurality of machines, as depicted in block 70. Machine data is then collected, stored and/or communicated at and/or from each of the plurality of machines according to the revised machine data management parameters, as depicted in block 72.

Steps 64 through 72 may be repeated periodically or continuously as the machines are operated. Thus, the method 60 may be performed such that the machine data management parameters are adjusted dynamically and in real time, even as the machines are in use. The steps of the method 60 may be performed entirely automatically and in the background such that machine operators are unaware of any changes to the management of the machine data. Alternatively, changes to the machine data management parameters may be presented to a user, such as a machine operator or a remote fleet manager, for approval before being implemented. By way of example, changes to the machine data management parameters may be presented to a machine operator via a touchscreen of the user interface 44, wherein the operator is allowed to review the proposed changes and is prompted to select an "accept" button or a "reject" button. Changes to the machine data management parameters may be presented to a remote fleet manager via one of the computers or devices 12-16, 18-24 or 28-32.

Embodiments of the invention may be used to optimize the use of machine resources to, for example, manage the machine data in a manner that focuses on the most critical or relevant data. By way of example, embodiments of the invention may involve selecting only the most time-critical data to communicate across communications channels with limited bandwidth or with use-based fees. Time-critical data may include data associated with, or indicative of, machine operation exceptions, such as a software malfunction, machine component degradation or machine component failure. Such time-critical data may be communicated to a machine dealer, to a machine owner, or both to apprise the machine manufacturer, machine dealer and/or machine owner of the state of the machine. Machine state information may be presented to a manufacturer, dealer or owner via a networked computing device such as one of the computing devices 18-24, 26-32.

The present invention may be used to adjust data management parameters for various different types of machines, such as mobile mechanical machines used in the agriculture, construction and/or forestry industries. By way of example, the machines may include tractors, bulldozers, harvesters, scrapers, loaders or excavators. The machines may be self-propelled or propelled by another machine, such as an implement pulled or carried by a tractor or bulldozer. Such implements may include, for example, seeders, tillage equipment, balers, machines for moving soil, and so forth. In some embodiments, the machines are heavy mechanical machines-that is, machines that must be self-propelled or moved by another machine during normal and proper operation.

The machines include hardware and/or software for collecting machine data including, for example, machine state data and/or environmental data. In some embodiments, each of the machines includes a communications and control system similar or identical to the system 38 illustrated in Fig. 2 and discussed above. The controller 40 may interact with the sensors 46 to collect the machine data and with the one or more storage components 50 to store the machine data. By way of example, the machine state data may include fluid and/or component temperatures, pressures, levels of vibration, engine speed, engine load, power takeoff speed, power takeoff load, ground speed, engine oil level, engine oil pressure, hydraulic fluid pressure, hydraulic fluid level, and tire air pressure. The environmental data may include ambient temperature, humidity, barometric pressure, wind speed, wind direction, machine location, machine orientation (e.g., heading, pitch, roll) and machine elevation.

As explained above, embodiments of the present invention involve adjusting data management parameters to optimize the collection, storage and/or communication of machine data. Data collection may be adjusted, for example, to change which data is collected and how often. Some data sensors may only be used when a particular condition is detected. A group of sensors may be available to collect data relating to a particular system or machine operation characteristic, but only one of the group of sensors may be used during normal operation and additional sensors may be used to collect additional data in exceptional circumstances. The frequency of data collection via some sensors may be adjusted, such as where additional data from a particular sensor is deemed necessary in response to a triggering event, such as a machine operation exception. Similarly, data collection at some sensors may be performed less frequently or stopped altogether in some circumstances.

Data storage may be adjusted, for example, by determining which data is stored and which data is discarded. Data may be discarded if it falls within a predetermined normal range or level and stored if it falls outside the pre-determined normal range or level. Thus, adjusting one or more values defining a normal range or level of machine operation may determine which data values are stored and which data values are discarded.

The data storage process may involve storing data in both a rolling cache and in long-term storage. A rolling cache is a temporary data storage mechanism or function wherein newly-acquired data is temporarily stored until a decision is made regarding which portions of the data in the rolling cache, if any, will be placed in long-term data storage, communicated to a remote system or device, or otherwise used or processed. Data in a rolling cache that is not placed in long-term data storage, communicated to a remote system or device, or otherwise used or processed is overwritten with new data, discarded or simply ignored. The use of a rolling cache enables the capture of detailed machine data prior to an event of interest. By way of example, if a machine operation exception is detected that triggers the capture of machine data associated in time with the event, the data in the rolling cache may include detailed machine data collected at the time of the triggering event as well as detailed machine data collected for a period of time immediately preceding the triggering event, such as thirty seconds or one minute. The data in the rolling cache may preserved and placed in long-term storage or communicated to a remote machine for use in analyzing events surrounding the triggering event.

A rolling cache may hold data for a predetermined amount of time before it is discarded, such as fifteen seconds, thirty seconds, forty-five seconds, one minute, two minutes or five minutes. Alternatively, a rolling cache may have or be associated with a particular amount of data storage, wherein the rolling cache fills the available data storage space and then begins overwriting data once the cache is full regardless of the amount of time required to fill the cache. Certain portions of data in the rolling cache may be placed in long-term storage or otherwise used, or the entire contents of the rolling cache may be stored or used. By way of example, if a machine component failure is detected the contents of the rolling cache at the time of the failure may be preserved, portions of the data in the rolling cache relating to the failed component may be identified and placed in long-term storage, and the rest of the data in the rolling cache may be ignored.

If the system uses a rolling cache, data storage parameters affecting the rolling cache may be adjusted to optimize data management. The level of detail (amount of newly-added data) may be adjusted, which may affect the length of the time window of data captured in the rolling cache, as additional data or detail may shorten the time window of the rolling cache as it will fill up more quickly. Also, events that trigger preservation of cache data may be redefined.

Adjusting the data management parameters may involve adjusting data communication processes. Data collected or generated by a machine may be communicated to a remote system or device in various ways. Some data may be communicated in real time while other data may not be communicated in real time. By way of example, some data may be communicated immediately or nearly immediately upon receipt via a wide area wireless communication link, such as a cellular data communication channel or a satellite data communication channel. Other data may be stored locally on the machine until it is transferred off the machine using a local communication protocol such as Wi-Fi or using a portable data storage device such as a USB-compatible data storage device. Thus, some data may be communicated via a faster, more expensive channel while some data may be communicated via a slower, less expensive channel.

To save money or optimize the use of limited data bandwidth, data deemed high priority may be communicated immediately or nearly immediately via a faster, more expensive channel while data deemed lower priority may be communicated via a slower, less expensive channel. In some embodiments of the invention, data deemed high priority may include data that falls outside of a predetermined normal range as such data may be associated with a machine operation exception. As data is collected from multiple machines and analyzed, the definition of high priority data and low priority data may change to reflect trends in machine operation exceptions.

The group of machines from which the machine data is collected and analyzed may be static or dynamic and machines may be selected for inclusion in a group according to any of various methods. In one exemplary embodiment, machines may be selected based on the geographic location of the machines. All of the machines in a particular region or regions, for example, may be included in a group. By way of example, the geographic region or regions may be based on legal or governmental boundaries, such as the borders of a country, state, province, district or county, or may be based on factors that affect machine operating conditions, such as climate, surface topography and soil composition.

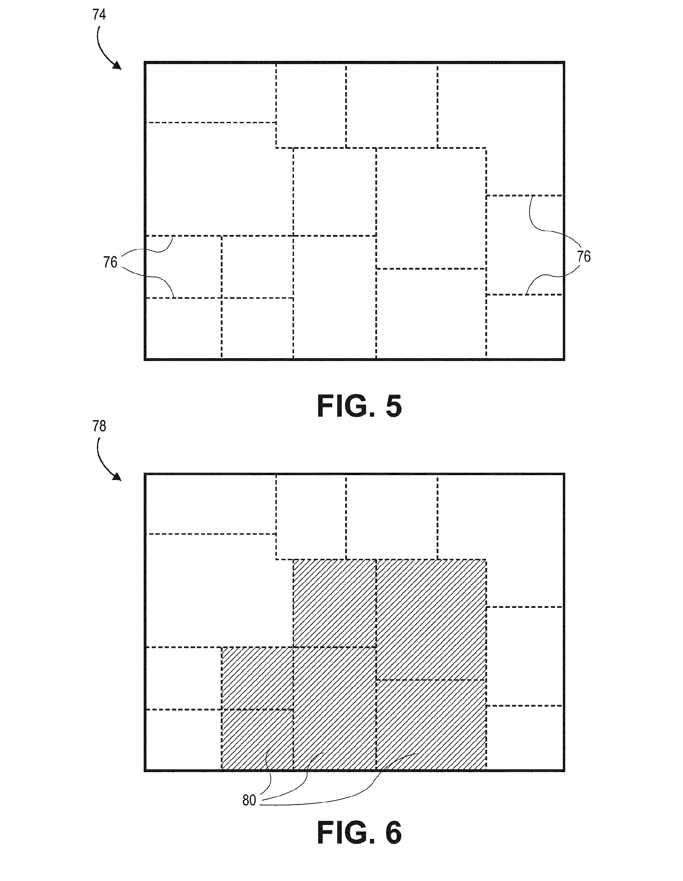

An exemplary map 74 including a plurality of governmental or legal boundaries 76 is illustrated in Fig. 5. The boundaries 76 may define a plurality of districts, counties, provinces or states. It may be desirable to define a group of machines as machines located within one or more of the areas defined by the boundaries 76. This may be important if the areas correspond to the territory covered by a machine dealer, for example, or if different areas have different regulations that affect how the machines are operated. The map 78 illustrated in Fig. 6 illustrates a plurality of the areas 80 selected to define a group of machines that are located within the selected areas. The area depicted by the maps 74 and 78 may be relatively large or relatively small, including hundreds of square kilometers or hundreds of thousands of square kilometers.

Environmental or climate conditions that may be considered in defining regions include patterns of precipitation, temperature, or humidity, as well as altitude. Thus, it may be desirable to include in a single group all of the machines operating in regions with similar climate conditions. Such a group may include multiple distinct regions located in several places across a single continent or across multiple continents. Regions based on climate conditions may be defined manually or automatically. A user may review climate condition data and define one or more regions based on the climate condition data. Alternatively or additionally, a computing device may gather climate data (e.g., from public or private weather databases) and automatically define regions with similar climate conditions.

Other factors that may affect operating conditions may include surface topography and soil composition. Operating a machine on a sloped surface may present different challenges than operating the same machine on a substantially level surface. Thus, geographic regions may be defined according to the amount of sloped terrain within the region. Other factors such as soil composition may affect operating conditions and therefore may be used to define geographic boundaries of machine groups.

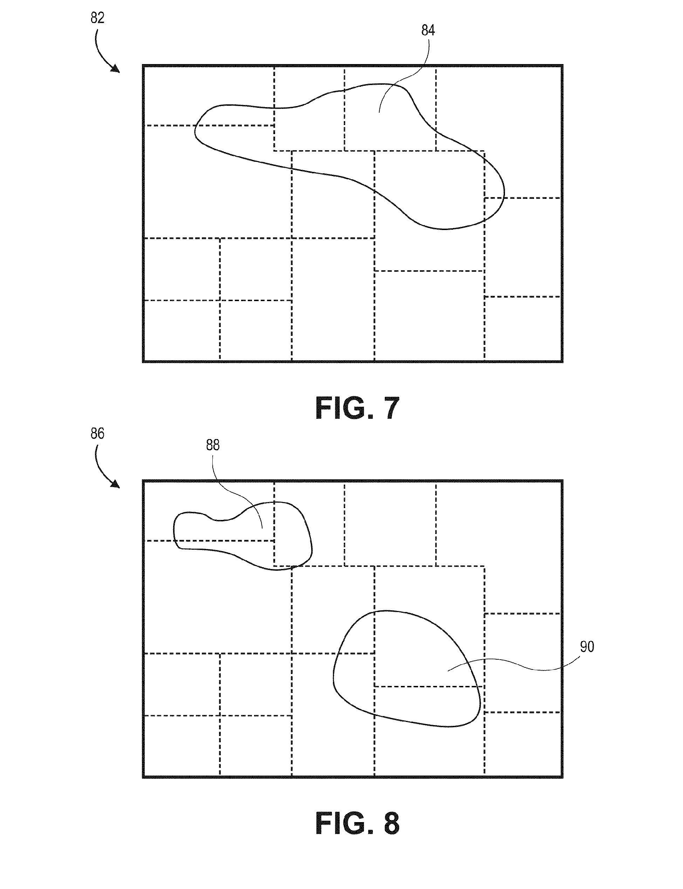

Figures 7 and 8 illustrate two exemplary scenarios in which geographic regions have been selected to define machine groups. The map 82 of Fig. 7 illustrates a single defined region 84 while the map 86 of Fig. 8 illustrates multiple distinct defined regions 88, 90. The defined regions in Figs. 7 and 8 cross the legal or political boundaries and may correspond to any of the environmental or climate conditions described above including, without limitation, precipitation patterns, temperature, humidity, altitude surface topography and soil composition.

In another exemplary embodiment machines may be selected for inclusion in a group based on machine model, product year or some other manufacturing characteristics of the machine. All of the machines of a particular model or range of models may be selected for inclusion in the group, or all of the machines manufactured in a particular year or range of years.

In another exemplary embodiment machines may be selected for inclusion in a group based on present or past use of the machines. Combines may be included in a group, for example, based on the type of crop being harvested or the type of implement associated with the combine, such as the type of header. All combine harvesters operating in a particular region and using a particular model of draper header may be included in a first group, for example, while all combine harvesters in the same region using a corn header may be included in a second group. Similarly, tractors may be included in a group based on the type of work presently being performing or the type of implement or implements currently associated with the tractors. The present use of a machine may be determined by, for example, the type of implement or implements attached to the machine, from digital work records associated with the machine, or from user input.

Machine groups may be dynamic such that machines are added to and removed from the groups as they meet or fail to meet criteria for inclusion. If a tractor is used to perform a tilling operation in the morning and then is used to perform a seeding operation in afternoon, it may be included in a first machine group in the morning and in a second machine group in the afternoon. Any combination of the conditions or factors described above may be used to define machine groups. According to a first example, a machine group may be created to include tractors between 100 and 150 horsepower and model years 2012 through 2015. According to a second example, a machine group may be created to include combines with 300 or more horsepower operating in a particular geographic region.

Data collected from the group of machines is collectively analyzed to identify opportunities to optimize the machine data management parameters, as depicted in block 68 of the method 60. The collected data may be combined into a single repository such as a data storage device associated with one or more of the computers 12, 14 or 16. The repository may be a single physical device or location, such as a single hard drive, or may comprise a plurality of physical devices.

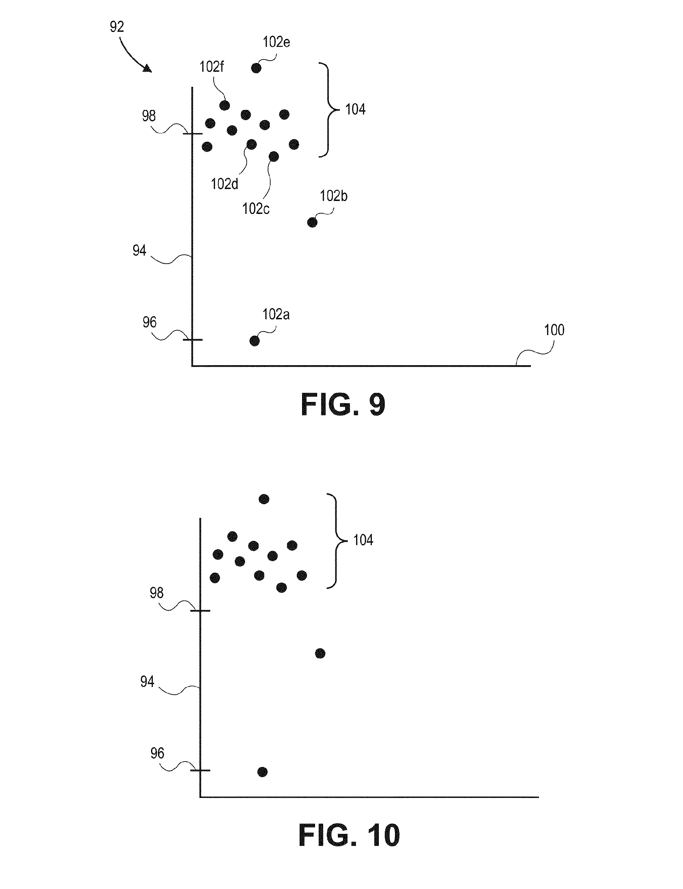

One exemplary method of using the combined machine data to optimize data management parameters involves comparing machine operating variables associated with machine operation exceptions to the bounds of normal operating parameters. An example of this is illustrated by the graph 92 depicted in Fig. 9. The vertical axis 94 represents a machine operating variable, such as a temperature, fluid pressure, load, or vibration level. A pair of boundary marks 96, 98 represent the boundaries of a range of parameter values defined as normal and thus may be used to determine how data relating to the machine operating parameter is managed. By way of example, machine operating variable values falling within the normal range (i.e., within the boundaries 96, 98) may be indicative of normal or healthy machine operation and, as such, are considered of low interest because they are not associated with a machine operation exception, such as component degradation or failure. In that scenario only parameter values falling outside the normal range may be retained in data storage and/or communicated to a remote device, and any parameter values falling within the normal range may be ignored or discarded.

The horizontal axis 100 in the graph of Fig. 9 corresponds to instances of machine operation exceptions, such as machine component degradation or failure or a software malfunction. Each of the points 102 represents a separate instance and may correspond to a different machine. It will be understood that this method may include hundreds, thousands or tens of thousands of data points with each data point possibly corresponding to a unique machine, and that the number of instances 102 illustrated in Fig. 9 and discussed herein is relatively small for purposes of illustration. The cluster 104 of instances 102 may represent a trend in machine operation exceptions that can be correlated to the machine operating variable values represented by the vertical axis 94. In this example there is an instance 102a near the lower boundary 96, an instance 102b at approximately a middle of the normal range, and a cluster 104 of instances at or near the upper boundary 98. Some instances 102 may be ignored as anomalies, such as by performing a statistical analysis on the instances and discarding any instances that are statistical outliers (for example, instances that do not lie within X standard deviations from the mean instance value). In this example, the instances 102a and 102b may be ignored as anomalies.

The cluster 104 of machine operation exception instances may be used to adjust one or both of the boundaries 96, 98 defining the normal range of parameter values. Parameter values corresponding to conditions associated with the exception instances may be considered high priority, and in order to prioritize the storage or use of the parameter values associated with those conditions the upper boundary 98 may be adjusted downward, as illustrated in Fig. 10. By adjusting the upper boundary 98 downwards the normal range is modified to exclude parameter values corresponding to the cluster 104 of instances of machine operation exceptions. Thus, operating parameter values collected that correspond to the cluster of exception instances will be considered high priority and will be stored, communicated or otherwise used.

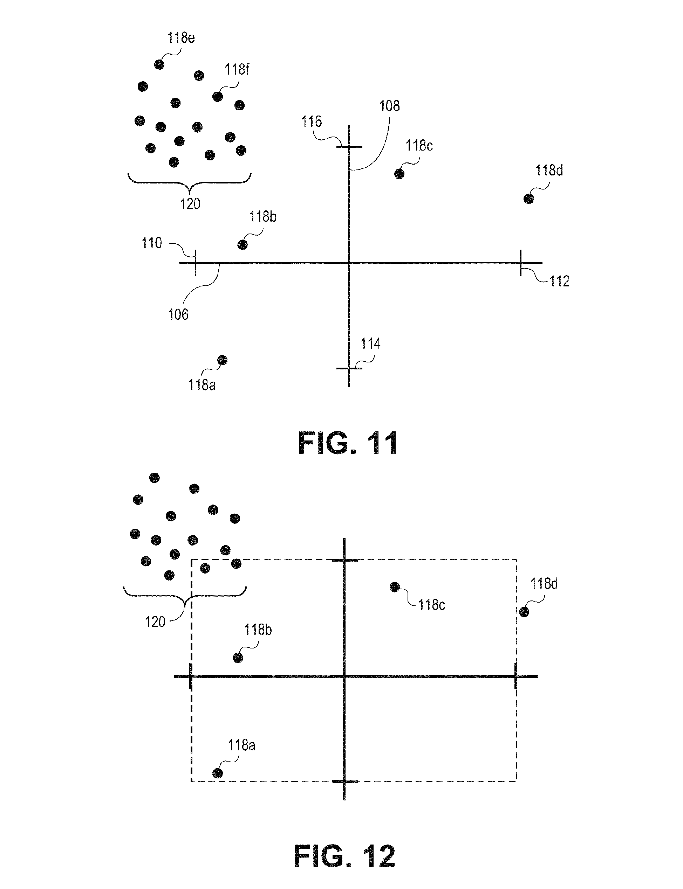

The example set forth above and illustrated in Figs. 9 and 10 involves adjusting data management parameters for a single machine operating parameter. The present invention is not so limited, however, and may involve adjusting data management parameters for multiple machine operating variables. A method of comparing instances of machine operation exceptions to two machine operating variables is depicted graphically in Fig. 11, wherein the horizontal axis 106 corresponds to a first machine operating variable and the vertical axis 108 corresponds to a second machine operating variable. A pair of boundary marks 110, 112 along the horizontal axis 106 define a predetermined normal range of the first machine operating variable and a pair of boundary marks 114, 116 along the vertical axis 108 define a predetermined normal range of the second machine operating variable.

Instances of machine operation exceptions that correspond to machine operating variables within the normal ranges may be ignored, while instances of machine operation falling outside the normal ranges may be stored, communicated or otherwise used. A plurality of instances 118 of machine operation exceptions are depicted in Fig. 11 wherein each instance 118 corresponds to a value of the first operating variable and to a value of the second operating variable. In this example a few of the instances 118a-d appear to be randomly positioned on the graph, while a number of the instances are grouped together in a cluster 120. The machine operating variable values falling within both normal ranges may be considered indicative of normal machine operation and, therefore, ignored or discarded, while machine operating variable values falling outside of either normal range may be considered indicative of a machine operation exception and stored, communicated or otherwise used. The graph of Fig. 12 illustrates more clearly with dotted lines the normal operating range bounded by the normal value ranges of both axes. It can be seen more clearly from Fig. 12 that three of the randomly positioned instances 118a-118c fall within the normal operating range, one of the randomly positioned instances 118d falls outside of the normal operating range, and all but two of the clustered instances 120 fall outside of the normal operating range. The cluster of instances 120 may represent a trend of machine operation exceptions, such as component failure. Because some of the instances of machine operation exceptions fall within the designated normal range of operation, some of the operating variables associated with the exceptions may not be preserved, communicated in a timely manner to a remote computing device, or otherwise used to respond to the trend of operation exceptions.

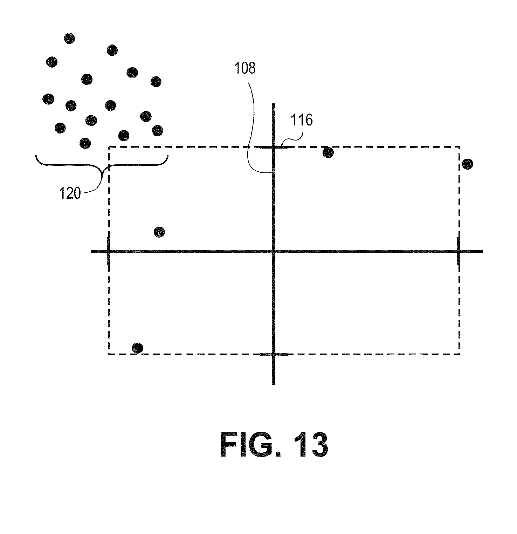

To address this issue the upper boundary 116 of the normal range of the vertical axis 108 may be adjusted downward so that all of the machine operation exception instances fall outside of the designated normal range of machine operation and, therefore, trigger collection or communication of the machine operation variables associated with those instances. An example of this adjustment is illustrated in Fig. 13, wherein the upper boundary 116 is adjusted downward so that all instances associated with the cluster 120 fall outside the normal range.

The machine data collected and used to adjust the machine data management parameters may include internal machine data, external machine data, or both. Internal machine data generally refers to machine data that is collected by an on-board machine system, such as the system 38. External machine data is data relating to one or more machines that is collected by a person or by a device or system that is not part of an onboard machine system. By way of example, external machine data may include data collected by a technician at a machine service center, data collected by an electronic diagnostics tool communicatively coupled with the machine, or both. Such external machine data may be manually or automatically stored in a database or other computer system and analyzed as part of the collective machine data as part of step 68 in the method illustrated in Fig. 4.

In an exemplary scenario, a user defines a machine group as all tractors operating within a geographic region, such as a region corresponding to a machine dealer's area of operations. Each of the tractors operating in the region is configured to collect machine operating data and communicate high priority portions of the machine operating data to a centralized data center using a cellular telephone communications network. Lower priority portions of the machine operating data are stored in on-board storage devices on each of the tractors. External machine data is also collected at one or more machine service centers in the area by technicians observing failed or degraded components and submit component failure or degradation information to a database via a computing device such as one of the devices 12-16, 18-24 or 28-32. The external machine data may also include data generated by an electronic diagnostic system plugged into the machines and configured to detect/diagnose machine component failure or degradation issues. All of the external machine data collected at the service center may be compiled into a single database or repository for use by the one or more computing devices that perform the data analytics to adjust the machine data management parameters.

A centralized computer receives the internal machine data from all of the machines in the group via, for example, a cellular data communications network or other wide area network. The centralized computer also receives the external machine data collected at the machine service center. The internal machine data indicates some instances of a particular machine component failure, and the external machine data indicates additional instances of the particular machine component failure as well as component degradation as observed by technicians. The centralized computer compares all of the instances of machine component failure and degradation-whether originating from the internal or external machine data-to the internal machine data to correlate the instances of machine component failure and degradation to the values of one or more machine operating variables.

The centralized computer then determines that the machines did not adequately store and/or communicate all of the machine operating variable data associated with the instances of machine component degradation and failure due to inadequate machine data management parameters. The centralized computer adjusts the machine data management parameters to capture the machine operating variables associated with the instances of component failure and degradation, and communicate the adjusted parameters to each of the machines via the cellular communications network. Each of the machines collects data and stores and/or communicates the data to the one or more computing devices according to the adjusted parameters, including machine operating variables indicative of the machine component degradation and failure. Alerts are generated and communicated to individual machine owners on the machine via the user interface 44, at a remote device such as one of the computing devices 18-24 or 28-32, or both.

Although the invention has been described with reference to the preferred embodiment illustrated in the attached drawing figures, it is noted that equivalents may be employed and substitutions made herein without departing from the scope of the invention as recited in the claims.

Having thus described the preferred embodiment of the invention, what is claimed as new and desired to be protected by Letters Patent includes the following:

## Claims

1. A system for managing machine data, the system comprising:
one or more computing devices operable to -
select a plurality of mobile machines to form a machine group;
receive machine operating data from each of the mobile machines in the machine group; and
use the collective machine operating data to define data management parameters associated with at least one of the mobile machines.

2. The system as set forth in claim 1, the one or more computing devices operable to select the plurality of mobile machines by defining a geographic region and selecting only machines within the geographic region.

3. The system as set forth in claim 2, the one or more computing devices further operable to -
automatically detect when one of the mobile machines leaves the geographic region and automatically remove that mobile machine from the machine group; and
automatically detect when an additional mobile machine enters the geographic region and automatically include that mobile machine in the machine group.

4. The system as set forth in claim 1, the one or more computing devices operable to define one or more geographic regions with a designated climate condition and select only machines within the one or more geographic regions.

5. The system as set forth in claim 1, the one or more computing devices operable to select the plurality of mobile machines by selecting only machines performing a designated type of work.

6. The system as set forth in claim 5, the one or more computing devices further operable to -
automatically detect when one of the mobile machines stops performing the designated type of work and automatically remove the mobile machine from the machine group; and
automatically detect when an additional mobile machine begins performing the designated type of work and automatically include the mobile machine in the machine group.

7. The system as set forth in claim 1, the one or more computing devices operable to select the plurality of mobile machines by selecting only machines of a designated model or designated plurality of models.

8. The system as set forth in claim 1, the one or more computing devices operable to select the plurality of mobile machines by selecting only machines associated with a designated type of implement.

9. The system as set forth in claim 1, the one or more computing devices operable to define first data management parameters associated with a first one of the mobile machines and to define second data management parameters associated with a second one of the mobile machines, the first data management parameters being different than the second data management parameters.

10. A method of managing machine data, the method comprising:
automatically selecting a plurality of mobile machines to form a machine group;
collecting machine operating data from each of the mobile machines in the machine group; and
using the collective machine operating data to define data management parameters associated with at least one of the mobile machines.

11. The method as set forth in claim 10, the step of selecting the plurality of mobile machines including defining a geographic region and selecting only machines within the geographic region.

12. The method as set forth in claim 11, further comprising -
automatically detecting when one of the mobile machines leaves the designated geographic area and automatically removing that machine from the machine group; and
automatically detecting when an additional mobile machine enters the designated geographic area and automatically including that machine in the machine group.

13. The method as set forth in claim 10, the step of selecting the plurality of mobile machines including selecting only machines within two or more geographic areas with similar climate conditions.

14. The method as set forth in claim 10, the step of selecting the plurality of mobile machines including selecting only machines performing a designated type of work.

15. The method as set forth in claim 14, further comprising -
automatically detecting when one of the mobile machines stops performing the designated type of work and automatically removing that machine from the machine group; and
automatically detecting when an additional mobile machine begins performing the designated type of work and automatically including that machine in the machine group.

16. The method as set forth in claim 10, the step of identifying the group of agricultural machines including identifying machines of a designated model or designated plurality of models.

17. The method as set forth in claim 10, the step of identifying the group of agricultural machines including identifying machines associated with a designated type of implement.

18. The method as set forth in claim 10, further comprising -
automatically identifying a new group of mobile machines;
collecting machine operating data from each of the mobile machines in the new group of mobile machines; and
using the collective machine operating data to define data management parameters associated with at least one of the machines in the new group of machines.

19. The method as set forth in claim 10, further comprising using the data management parameters to automatically select machine data for communication from at least one of the machines to a remote computing device.

20. A non-transitory machine-readable storage medium having instructions stored therein which, when executed by one or more computing devices, cause the one or more computing devices to perform operations comprising:
selecting a plurality of mobile machines to form a machine group;
receiving machine operating data from each of the mobile machines in the machine group; and
using the collective machine operating data to define data management parameters associated with at least one of the mobile machines.
